# EUROPÄISCHE PATENTSCHRIFT

(11) **EP 3 334 640 B1**
(45) Veröffentlichungstag und Bekanntmachung des Hinweises auf die Patenterteilung: **18.11.2020**
(21) Anmeldenummer: 16751232.6
(22) Anmeldetag: 29.07.2016
(51) Int. Cl.: B62D 21/02, B62D 21/10, B62D 21/18, B62D 21/11, B62D 25/20, B62D 29/00, B62D 29/04

(54) **SELBSTTRAGENDES UNTERGESTELL FÜR EIN FAHRZEUG SOWIE EIN SOLCHES FAHRZEUG**
SELF-SUPPORTING UNDERFRAME FOR A VEHICLE AND SUCH A VEHICLE
CHÂSSIS AUTOPORTEUR POUR UN VÉHICULE AINSI QU'UN TEL VÉHICULE

(30) Priorität: 11.08.2015 DE 202015104222 U; 11.08.2015 DE 202015104221 U
(43) Veröffentlichungstag der Anmeldung: 20.06.2018
(73) Patentinhaber: Carbon Truck & Trailer GmbH, 21684 Stade (DE)
(72) Erfinder: LANGE, Hans Jürgen, 21077 Hamburg (DE); KAISER, Ria, 21077 Hamburg (DE); KALKOFFEN, Gerret, 22085 Hamburg (DE)
(74) Vertreter: Raffay & Fleck
(86) Internationale Anmeldenummer: PCT/EP2016/068170
(87) Internationale Veröffentlichungsnummer: WO 2017/025358

(56) Entgegenhaltungen:
- EP-A1- 1 464 567
- EP-A1- 2 778 025
- DE-A1- 3 803 603
- DE-A1- 19 912 173
- US-A1- 2009 179 461

## Beschreibung

Die vorliegende Erfindung betrifft ein selbsttragendes Untergestell für ein Fahrzeug sowie ein solches Fahrzeug.

Untergestellte für Fahrzeuge sind aus dem Stand der Technik zahlreich bekannt. Beispiele hierfür sind die EP2778025 und die EP1464567.

In der jüngeren Vergangenheit wurden auch Untergestelle aus Faserverbundswerkstoffen eingesetzt. Hier haben sich vor allem Untergestelle aufbauend auf einem Monocoque durchgesetzt. Auch sind Monocoques bekannt, die Verstärkungselemente aufweisen. So ist es beispielsweise bekannt in einer Tragwanne lang gestreckte Verstärkungselemente anzuordnen.

Die vorliegende Erfindung hat es sich zur Aufgabe gemacht, ein neuartiges Fahrgestell oder Untergestell anzugeben, das den gestiegenen Anforderungen an solche Gestelle Rechnung tragen kann. Insbesondere soll die Masse reduziert werden, die Steifigkeit und die aufnehmbaren Kräfte erhöht werden und das Ergebnis einer Umwelt orientierten Gesamtbetrachtung verbessert werden. Darüber hinaus ist es auch gewünscht, die Produktion und den Transport einfacher, kostengünstiger und ressourcenschonender zu gestalten. Insbesondere ist es daher wünschenswert, die Fertigung zu vereinfachen, Materialverschnitt und händische Prozesse zu minimieren. Dadurch lässt sich nicht nur der Energieeinsatz reduzieren, sondern ist auch der Installationsaufwand für die notwendigen Maschinen deutlich geringer anzusetzen. Gelöst wird die Aufgabe durch ein selbsttragendes Untergestell für ein Fahrzeug sowie ein Landfahrzeug gemäß Anspruch 1 und ein Verfahren nach Anspruch 13. Die abhängigen Ansprüche 2-12 und 14 bis 15 geben vorteilhafte Weiterbildungen an.

Verfahrensgemäß werden dabei zunächst zwei erfindungsgemäße wannenartige Elemente zur Bildung der Monocoques bereitgestellt und entsprechend angeordnet und sodann ein erfindungsgemäßes Verstrebungsdeckelement mit den zwei Monocoques mit Bindemitteln fest verbunden. Die Verbindung kann dabei direkt und/oder mittelbar, beispielsweise über Flansche und/oder sich nach außen erstreckende Klebeflächen hergestellt werden. Mit besonderem Vorteil werden vor oder nach der Verbindung mit dem Verstrebungsdeckelement Querverstrebungen, vorteilhafterweise eine Querverstrebung, insbesondere zwei oder drei Querverstrebungen zwischen den Monocoques angeordnet und insbesondere mit diesen verbunden, insbesondere über Bindemittel und insbesondere anschließend das Deckelement bzw. die Deckelemente aufgebracht. Zur Herstellung eines Landfahrzeuges wird das Untergestell als Untergestell des Landfahrzeuges verwendet.

Verfahrensgemäß werden die wannenartigen Elemente, die auch durch wannenartige Abschnitte gebildet sein können, insbesondere wie im Folgenden beschrieben ausgebildet bereitgestellt oder hergestellt. Sie werden insbesondere vor der Verbindung mit dem mindestens einen Verstrebungsdeckelement ausgerichtet und relativ zueinander angeordnet wie im Folgenden beschrieben. Mit weiterem Vorteil wird neben dem mindestens einen Verstrebungsdeckelement, bei dem es sich um ein Deckelement handelt, mindestens ein weiteres Deckelement zum teilweisen Verschließen mindestens eines wannenartigen Elements mit diesem verbunden.

Gegenständlich weist das Untergestell zwei voneinander beabstandete wannenartige Elemente auf, die durch mindestens ein erfindungsgemäßes Verstrebungsdeckelement, das mit den zwei wannenartigen Elementen mit Bindemitteln verbunden ist, miteinander verbunden sind. Das Landfahrzeug weist ein solches Untergestell auf. Die wannenartigen Elemente und Teile des Verstrebungsdeckelement bilden dabei zwei Monocoques aus und/oder sind Bestandteil zweier Monocoques.

In Bezug auf die wannenartigen Elemente, die Monocoques, das Verstrebungsdeckelement, die Querverstrebungen sowie das Deckelement, ihre Ausbildung, Anordnung und Verbindung gelten die in Bezug auf das Untergestell bzw. das Landfahrzeug ausgeführten vorteilhaften Ausbildungen ebenso als vorteilhafte Ausführungen des Verfahrens, was durch eine entsprechende Wahl derartige Elemente und/oder deren Verwendung und/oder eine entsprechende Anordnung und/oder Verbindung realisiert werden kann.

Die grundlegende Besonderheit des erfindungsgemäßen Untergestells bzw. Landfahrzeuges liegt in der Verwendung von zwei Monocoques, somit der Ausbildung eines Duocoques mit dazwischen angeordneter Verstrebung und/oder Verbindung, wobei die Verstrebung und/oder Verbindung zumindest teilweise auch Bestandteil jedes der beiden Monocoques ist. Durch eine derartige Konstruktion lassen sich zahlreiche Vorteile erreichen. Die Verstrebung und/oder Verbindung ist dabei mit den wannenartigen Elementen fest verbunden. Dies kann direkt und/oder indirekt, beispielsweise durch Flansche und/oder sich nach außen erstreckende Klebeflächen erfolgen. Nicht nur können eine gute Umweltgesamtbilanz, hohe Tragfähigkeit und Steifheit und ein niedriges Gewicht miteinander kombiniert werden, sondern kann auch eine Gleichteilfertigung der zwei wannenartigen Elemente und/oder Monocoques erreicht werden. Darüber hinaus können die vergleichsweise kleinen Monocoques mit deutlich geringerem Anpressdruck und/oder in einem kontinuierlichen Verfahren und somit mit deutlich leichteren und einfacheren Maschinen und mit weniger Ressourceneinsatz hergestellt werden. Darüber hinaus können die wannenartigen Anteile der Monocoques auch ineinander stapelbar ausgeführt werden und sind die wannenartigen Anteile der Monocoques sowie die Deckelemente einfach händel- und transportierbar. Die wannenartigen Elemente sind dabei insbesondere als lang gestreckte wannenartigen Elemente ausgeführt, deren Länge deutlich ihre Höhe und Breite überschreitet. Insbesondere im Querschnitt parallel zur Breite des wannenartigen Elements weist es einen wannenartigen oder zumindest teilweise U-förmigen Querschnitt auf.

Als Bindemittel kommen beispielsweise Polymere und/oder Harze, beispielsweise Epoxidharze in Frage. Solche Bindemittel können sowohl zur Verbindung der Teile, beispielsweise der wannenartigen Elemente mit einem Verstrebungsdeckelement als auch als Bindemittel innerhalb des Faserverbundwerkstoffes eingesetzt werden, aus denen beispielsweise die wannenartigen Elemente gebildet sein können.

Das erfindungsgemäße selbsttragende Untergestell für ein Fahrzeug, insbesondere Landfahrzeug ist geeignet, als Untergestell eingesetzt zu werden, an dem weitere Elemente, wie Achsen, Radaufhängungen und Aufbau befestigt werden. Insbesondere wird jedoch bevorzugt, wenn das selbsttragende Untergestell oder Landfahrzeug so ausgeführt ist, dass an einem ersten Ende jedes Monocoques und/oder mindestens eines Deckelements, insbesondere Verstrebungsdeckelements, eine (gemeinsame) zusammenhängende und an beiden Monocoques und/oder dem mindestens einem Deckelements, insbesondere Verstrebungsdeckelement, angebundene Konstruktion verbaut ist, verbaut werden kann und/oder verbaut wird, die mindestens eine Achse aufweist. Hier wird insbesondere bevorzugt, wenn Teil der angebundenen oder anbindbaren Konstruktion ein Fahrerhaus oder ähnliches ist. Auch wird es bevorzugt, wenn das erste Ende ein in Fahrtrichtung vorne gelegenes Ende ist. Das erfindungsgemäße selbsttragende Untergestell, insbesondere dessen Monocoques und/oder Deckelemente erstreckt/erstrecken sich somit insbesondere nicht über die gesamte Länge eines Landfahrzeuges, dessen Teil das erfindungsgemäße Untergestell ist und auch nicht vollständig zwischen all seinen Achsen. Zu diesem Zwecke sind vorteilhafterweise an einem ersten Ende jedes Monocoques und/oder mindestens eines Deckelements, insbesondere Verstrebungsdeckelements, entsprechende Vorrichtungen zur Verbindung mit einer solchen angebundenen/anbindbaren Konstruktion vorgesehen. Eine solche Verbindung wird bevorzugt über Verschraubungen hergestellt. Dazu können an einem ersten Ende der Monocoques und/oder des mindestens eines Deckelements, insbesondere Verstrebungsdeckelements, Gewinde und/oder Schraubendurchführungen, insbesondere metallische, vorgesehen sein.

Die wannenartigen Elemente müssen nicht über die gesamte Erstreckung des jeweiligen Teils wannenartig ausgeführt sein, sie können auch Abschnitte größerer Elemente sein, die als wannenartiges Element einen entsprechenden wannenartigen Abschnitt aufweisen. Es wird jedoch bevorzug, wenn die wannenartigen Elemente über die gesamte des Teils und/oder vollständig wannenartig ausgebildet sind, insbesondere das Teil keine nicht wannenartigen Abschnitte aufweist.

Insbesondere wird es bevorzugt, wenn die wannenartigen Elemente über ihre gesamte Längserstreckung geleichbleibend, beispielsweise im Querschnitt eine identische Querschnittsfläche und/oder Materialstärke aufweisen und/oder identisch ausgebildet sind. Davon ausgenommen sind Anschlusselemente, zur Befestigung anderer Elemente, wie beispielsweise eingebrachte Gewinde zur Anbindung weiterer Teile. Insbesondere wird es bevorzugt, wenn die wannenartigen Elemente in Bezug auf den aus Faserverbundwerkstoffen gebildeten Anteil über ihre gesamte Längserstreckung geleichbleibend, beispielsweise im Querschnitt eine identische Querschnittsfläche und/oder Materialstärke aufweisen und/oder identisch ausgebildet sind. Es ist dabei unschädlich, wenn die wannenartigen Elemente in ausgewählten Abschnitten, beispielsweise in Abschnitten zur Anbindung von Achsen und/oder anderen Untergestellabschnitten oder Zugköpfen, mit weiteren, auch wannenartigen, Verstärkungselementen, beispielsweise innen und/oder außen, verstärkt werden, die insbesondere mit den wannenartigen Elementen verklebt sind oder werden, oder mit Anbindungsmöglichkeiten für Verstärkungselemente ausgebildet sind. Anbindungsmöglichkeiten können beispielsweise durch Anbindungselemente, wie zum Beispiel solche zur kraft- und/oder Formschlüssigen Anbindung von Verstärkungselementen ausgebildet sein. Verstärkungselemente können beispielsweise lang gestreckte Elemente, wie Leisten oder Streben , vorwiegend flächige, beispielsweise als Schottbleche oder -wände in den wannenartigen Elementen ausgeführte oder in einer Fläche verstrebte zur Quer- und/oder Diagonalversteifung dienende und vorzugsweise innenliegende Bauteile, oder wannenartige Verstärkungselemente sein. In einer Fläche verstrebte Verstärkungselemente sind insbesondere solche, die flächig mit Aussparungen, insbesondere regelmäßigen Aussparungen ausgebildet sind und insbesondere fachwerkartig oder wabenartig, ausgeführt sind. Insbesondere sind darunter Verstärkungselemente zu verstehen, die aus sich kreuzenden lang gestreckten Elementen, die in einer Fläche angeordnet sind, gebildet sind und/oder werden. Dabei müssen nicht einzelne Elemente verbunden werden, sondern kann die Struktur auch einteilig geschaffen sein/werden. Bei einer flächigen Ausbildung ist davon auszugehen, dass die Anordnung eine größere Erstreckung in Richtung Breite und Länge der Fläche als in Ihrer Höhe aufweist. Insbesondere übersteigt die Höhe 10mm, insbesondere 5 mm, nicht.

Die Anbindungselemente können beispielsweise durch Nuten und/oder Federn realisiert werden. Wannenartige Verstärkungselemente sind insbesondere so ausgebildet, dass sie sich innen oder außen an das wannenartige Element anschmiegen können. Sie werden insbesondere so mit den wannenartigen Elementen verbunden, dass die wannenartigen Verstärkungen flächig an den wannenartigen Elemente anliegen. Solche Verstärkungselemente und/oder Anbindungselemente sind nicht nur nicht schädlich, sondern werden vielmehr bevorzugt. Bevorzugt wird es, wenn über maximal 70%, insbesondere maximal 50%, der Längserstreckung der wannenartigen Elemente Verstärkungselemente und/oder Anbindungselemente vorgesehen sind. Unschädlich ist es auch, wenn die wannenartigen Elemente in manchen Bereichen Anschlusselemente, insbesondere metallische, aufweisen.

Die wannenartigen Elemente sind dabei vorteilhafterweise jeweils einteilig ausgebildet. Sie sind vorteilhafterweise so ausgebildet, dass sie nicht zerstörungsfrei zerlegt werden können. In einer bevorzugen Ausbildungsform sind sie jeweils gebildet aus drei mit einander, insbesondere nicht zerstörungsfrei lösbar, verbundenen Teilen. Die drei Teile sind vorteilhafterweise aus Faserverbundwerkstoff gebildet. Von den drei Teilen ist insbesondere ein Teil ein, insbesondere flach ausgebildetes, Bodenelement und weisen die beiden anderen Teile insbesondere zumindest jeweils einen Bodenabschnitt und einen Flankenabschnitt sowie wahlweise einen Anbindeabschnitt auf. Sie sind insbesondere im Querschnitt Z-förmig ausgebildet und insbesondere zumindest in ihrem Faserverbundwerkstoffanteil identisch ausgebildet. Insbesondere werden die wannenartigen Elemente in einer solchen Ausführung so ausgebildet, dass die drei Teile miteinander verklebt werden. Insbesondere werden die wannenartigen Elemente in einer solchen Ausführung so ausgebildet, dass die Bodenabschnitte der beiden anderen Teile fluchtend zueinander und nebeneinander und/oder angrenzend zueinander angeordnet werden, sodass die Flankenabschnitte außen relativ zu den Bodenabschnitten liegen und werden die Bodenabschnitte über das Bodenelement miteinander verbunden, sodass ein wannenartiges Element ausgebildet wird.

Erfindungsgemäss sind die wannenartigen Elemente jeweils einteilig so hergestellt, dass sie in einem einzigen Prozess vollständig aus Faserverbundwerkstoff geschaffen werden.

Insbesondere ist/wird das Bindemittel jedes wannenartigen Elements und/oder jedes der Bestandteile, aus denen die wannenartigen Elemente aufgebaut sind, insbesondere die genannten drei Teile, jeweils in einem Prozessschritt ausgehärtet.

Insbesondere ist/wird jedes wannenartige Element und/oder jede der Bestandteile, aus denen die wannenartigen Elemente aufgebaut sind, insbesondere einteilige wannenartige Elemente und/oder die genannten drei Teile, in einem kontinuierlichen Verfahren, insbesondere in einem Pultrusionsverfahren hergestellt.

Mit besonderem Vorteil ist/wird jedes wannenartige Element und/oder jede der Bestandteile, aus denen die wannenartigen Elemente aufgebaut sind, insbesondere die genannten drei Teile, in zumindest jeweils einem endlos bzw. kontinuierlichen Verfahren, insbesondere Pultrusionsverfahren, hergestellt. Mit besonderem Vorteil werden identische Teile in einem gemeinsamen endlos bzw. kontinuierlichen Prozess hergestellt. Ein Prozess oder Verfahren ist im Sinne dieser Beschreibung endlos bzw. kontinuierlichen, wenn mehrere Bauteile ohne Unterbrechung als ein gemeinsames, später zu trennendes Bauteil hergestellt werden. Die Menge der im gemeinsamen Bauteil enthaltenen, später getrennten Elemente oder die Länge des endlosen bzw. kontinuierlichen Verfahrens ist dabei insbesondere durch die Zufuhr von Ausgangsmaterialien, insbesondere deren Länge, beispielsweise die Länge von Fasermatten, sofern diese nicht verknüpft werden können, beschränkt.

Insbesondere ist/wird jedes wannenartige Element und/oder jedes der Bestandteile, aus denen die wannenartigen Elemente aufgebaut sind, insbesondere die genannten drei Teile, unter Verwendung von mindestens zwei übereinander angeordneten Fasermatten hergestellt. Die Fasermatten können beispielsweise als Gelege oder Gewebe ausgebildet seinlnsbesondere ist mindestens eine Lage von Fasermatten beinhaltet mit einer Faserorientierungen von 0° und/oder 90° zur Längserstreckung des Bauteils, sowie eine oder mehrere Lagen von Fasermatten mit Faserorientierungen von vorzugsweise zwischen +/-30° und +/-60° zur Längserstreckung des Bauteils. Faserorientierungen von 0°, also solchen, die parallel zur Längserstreckung des Bauteils verlaufen, können insbesondere auch nicht durch Fasermatten sondern durch Faserbündel, sogenannte "Rovings", realisiert werden

In einer bevorzugten Ausbildungsalternative sind/werden Boden und Flanken der wannenartigen Elemente identisch, insbesondere unter Verwendung der gleichen Faserlagen, aufgebaut. In einer anderen bevorzugten Ausbildungsvariante sind/werden Boden und Flanken der wannenartigen Elemente unterschiedlich, insbesondere unter Verwendung zumindest teilweise unterschiedlichen Faserlagen, aufgebaut.

Mit besonderem Vorteil weisen die wannenartigen Elemente zumindest in Teilbereichen, insbesondere in solchen Teilbereichen, die Kontakt mit Metall aufweisen oder für solchen Kontakt vorgesehen sind, insbesondere in Anbindungsbereichen, eine, insbesondere obere, Faserlage aus Glasfaser und/oder einem anderen Isolator auf. Mit besonderem Vorteil weisen die wannenartigen Elemente zumindest in Teilbereichen, insbesondere an Verklebebereichen, also solchen Bereichen die für eine spätere Verklebung vorgesehen sind, Abreißgewebe als oberste Schicht auf.

Mit besonderem Vorteil weisen die wannenartigen Elemente metallische Anbindungselemente auf. Diese können zum Beispiel schon bei der Ausbildung der wannenartigen Elemente, insbesondere vor der Aushärtung eines Bindemittels des Faserverbundwerkstoffes, aus denen die wannenartigen Elemente gebildet sein können, eingebracht werden. So können beispielsweise in ihrer Oberfläche stark vergrößerte metallische Anbindungselement mit oder ohne Gewinden in den Faserverbundwerkstoff vor Aushärtung des Bindemittels, beispielsweise einen Harzes, eingebracht werden. Eine starke vergrößerte Oberfläche liegt insbesondere dann vor, wenn die Oberfläche gegenüber einer gedachten gemittelten Oberfläche um mindestens 200% erhöht ist, dies ist beispielsweise durch eine Oberfläche mit einer Vielzahl von Stacheln zu erreichen.

Eine weitere Möglichkeit der Einbringung, insbesondere bei der Verwendung von thermoplastischen Bindemitteln im Faserverbundwerkstoff, stellt die nachträgliche Einbringung, beispielsweise nach teilweisem und/oder lokalem Erweichen und/oder Aufschmelzen des thermoplastischen Bindemittels dar. Dabei kann insbesondere das Erweichen und/oder Aufschmelzen oder ein weiteres Erweichen und/oder Aufschmelzen genutzt werden, um das metallische Anbindungselement mit dem vor der Einbringung im wannenartigen Element vorhandenen thermoplastischen Bindemittel zu befestigen.

Mit besonderem Vorteil weist das selbsttragende Untergestell ein an einem ersten Ende, insbesondere an dem ersten Ende der Monocoques und/oder des mindestens einen Deckelements, insbesondere Verstrebungsdeckelements, befestigtes vorderes Untergestell als angebundene Konstruktion auf, das insbesondere eine Querverstrebung zwischen den zwei Monocoques beinhaltet und insbesondere eine Aufnahme oder Aufhängung für eine Achse aufweist und insbesondere nicht oder zumindest nicht überwiegend aus Faserverbundwerkstoff gefertigt ist.

Das selbsttragende Untergestell selbst weist zwei parallel zueinander angeordnete und voneinander beabstandete langgestreckte und an mindestens vier Seiten zu mindestens 50% verschlossene Monocoques auf. Diese vier Seiten sind insbesondere die Längs- und nicht die Stirnseiten. Die Monocoques selbst weisen wiederum jeweils ein einteiliges wannenartiges Element aufweisend mindestens einen unteren Boden und zwei sich vom Boden aufwärts erstreckende Seitenwände, auch Flanken genannt, und mindestens ein das wannenartige Element, insbesondere auf einer Seite, über mindestens 50% der Längserstreckung des wannenartigen Elementes verschließendes Deckelement auf. Dabei weist das mindestens eine Deckelement eines jeden der zwei Monocoques mindestens ein querversteifendes Verstrebungsdeckelement auf bzw. beinhaltet dieses. Das Verstrebungsdeckelement der zwei Monocoques ist als gemeinsames einen zwischen den Monocoques liegenden Zwischenraum überspannendes einteiliges Verstrebungsdeckelement ausgeführt. D.h., das erfindungsgemäße Untergestell weist mindestens ein einteilig ausgeführtes Verstrebungsdeckelement auf, dass Teil jedes der mindestens zwei Monocoques ist und diese jeweils zumindest teilweise verschließt und den Zwischenraum zwischen den Monocoques überspannt. Dabei muss der Zwischenraum nicht in seiner gesamten Länge, also in der Richtung parallel zur Längserstreckung der wannenartigen Elemente der Monocoques überspannt werden. Hier können beispielsweise Aussparungen vorgesehen sein. Besonders bevorzugt wird eine Ausgestaltung, bei der der Zwischenraum lediglich dort überspannt wird, wo mittlere Querträger, insbesondere mittlere Querträger mit wannenartigem Element, angeordnet sind.

Es können auch mehrere Verstrebungsdeckelement vorgesehen sein, zum Beispiel ein vorderes und ein hinteres, beispielsweise im ersten Abschnitt bzw. im zweiten Abschnitt die wannenartigen Elemente der Monocoques teilweise verschließend. Entscheidend kommt es jedoch darauf an, dass es mindestens eine einteilige Verbindung von einem Monocoque zum anderen gibt, die durch ein Verstrebungsdeckelement gebildet wird. Dabei ist das Element einteilig ausgeführt zur einteiligen Verbindung zwischen den Monocoques. Einteilig ist es dann ausgeführt, wenn es aus einem Teil, beispielsweise einer Stahlpatte oder mehreren Teilen, die unlösbar und/oder nicht zerstörungsfrei lösbar miteinander verbunden sind, beispielsweise einer Faserverbundplatte ausgebildet ist. Es ist unschädlich wenn an dem Verstrebungsdeckelement weitere Teile, auch Deckelemente, lösbar und/oder unlösbar befestigt sind.

Mit besonderem Vorteil ist ausschließlich ein als Verstrebungsdeckelement ausgeführtes Deckelement im Untergestell beinhaltet.

Mit besonderem Vorteil ist das mindestens eine Verstrebungsdeckelement als Platte in Sandwichbauweise ausgebildet.

Mit besonderem Vorteil steht das mindestens eine Verstrebungsdeckelement an einem Ende in Längserstreckung der Monocoques über diese über, insbesondere in Fahrtrichtung am hinteren Ende. Die Monocoques sind vorteilhafterweise parallel zur Fahrrichtung angeordnet. Mit besonderem Vorteil weisen die Monocoques an einem Ende, insbesondere an einem in Fahrtrichtung vorne gelegenem Ende, einen mit dem wannenartigen Element insbesondere einteilig ausgebildeten und/oder mit diesen fest verbundener Übergangsabschnitt auf, die sich von den Monocoques jeweils nach innen und/oder nach oben und/oder unten erstrecken und an den sich wiederum ein sich parallel zur Längserstreckung der wannenartigen Elemente erstreckender Anschlussabschnitt anschließt, der insbesondere mit dem wannenartigen Element fest verbunden und/oder einteilig ausgeführt ist. Der Übergangsabschnitt ist insbesondere aus Kohlefaserverbundwerkstoff und/oder Glasfaserverbundwerkstoff, insbesondere vollständig, ausgebildet. Er ist insbesondere wannenartig oder rohrförmig ausgebildet.

Vorteilhafterweise bildet das mindestens eine Deckelement, insbesondere Verstrebungsdeckelement die Bodenplatte des Landfahrzeuges, dessen Untergestell teilweise durch das mindestens eine Deckelement gebildet wird.

Die Dicke der Deckelemente, insbesondere des Verstrebungsdeckelements, beträgt vorteilhafterweise 20 - 120 mm. Die Deckelemente und/oder das Verstrebungsdeckelement weisen/weist insbesondere einen Kern auf, der von mindestens zwei Seiten mit Deckschichten abgeschlossen wird. Der Kern besteht insbesondere aus Schaum, gestichtem Schaum, einer Wabenstruktur, Harz und/oder Holz. Die Deckschichten bestehen insbesondere aus Faserverbundwerkstoff, Metall und/oder Holz, insbesondere aus Carbon- und/oder Glasfaserverbundwerkstoff.. Die Deckschichten weisen insbesondere eine Dicke von 0,5 bis 5 mm auf. Bei gestichtem Schaum handelt es sich um ein Konstruckt, bei dem zwischen mindestens zwei miteinander verbundenen, insbesondere vernähten, Faserlagen, die Teil der Deckschichten sein können, Schaum eingebracht wird. Das in die Faserlagen zur Aushärtung eingebrachte Bindemittel wird so eingebracht und ausgehärtet, dass es teilweise auch in und/oder um die Verbindung der Faserlagen fließt und bei der Aushärtung harte und/oder steife Verbindungen zwischen den Faserlagen und durch den Schaum herstellt. Eine solche Anordnung kann als Deckelement und insbesondere als Verstrebungsdeckelement genutzt werden.

Des Weiteren sind die Monocoques vorteilhafterweise so ausgebildet, dass die jeweils einen ersten Abschnitt und einen zweiten Abschnitt aufweisen, wobei der zweite Abschnitt in einer Mittelebene durch die zwei Monocoques parallel zu den Längserstreckungen der wannenartigen Elemente der zwei Monocoques senkrecht zur Längserstreckung des wannenartigen Elements des Monocoques eine größere Erstreckung aufweist als der erste. Sofern in diesem Text von der Längserstreckung eines Monocoques gesprochen wird ist die Längserstreckung seines wannenartigen Elements darunter zu verstehen. Er weist somit im allgemeinen Sprachgebrauch eine größere Breite auf als der erste. Des Weiteren weist jeder Monocoques einen in Richtung seiner Längserstreckung zwischen dem ersten und dem zweiten Abschnitt gelegenen dritten Abschnitt auf, der über seine Längserstreckung vom zweiten und ersten Abschnitt eine sich verringernde Erstreckung, im allgemeinen Sprachgebrauch also eine sich verringernde Breite, aufweist.

Ein selbsttragendes Untergestell zeichnet sich insbesondere dadurch aus, dass es zumindest über 30%, insbesondere 50%, seiner Längserstreckung keine weiteren Versteifungselemente erfordert, um in sich steif und stabil zu sein. Insbesondere erfordert es keine weiteren Versteifungselemente. Insbesondere ist das Untergestell nicht in einer Wanne aufgenommen und/oder sind die Monocoques unten und/oder nach unten hin und/oder an der von dem mindestens einen Deckelement abgewandten Seite maximal über 30%, insbesondere maximal 50% ihrer Länge mit weiterem Material, beispielsweise Verstärkungen umgeben, insbesondere sind sie unten und/oder nach unten hin und/oder an der von dem mindestens einen Deckelement abgewandten Seite nicht mit weiterem Material umgeben. Mit besonderem Vorteil befindet sich unterhalb der Deckelemente kein den Zwischenraum zwischen den wannenartigen Elementen und die wannenartigen Elemente überspannendes Element, insbesondere beinhaltet das Untergestell abgesehen von dem mindestens einen Deckelemente keine den Zwischenraum zwischen den wannenartigen Elementen und die wannenartigen Elemente überspannende Elemente. Insbesondere beinhaltet das Untergestell zumindest über 30%, insbesondere 50%, vorzugsweise 100%, der Längserstreckung der wannenartigen Elemente außer den die wannenartigen Elemente beinhaltenden Monocoques und/oder den Deckelementen keine längstragenden und/oder längsversteifenden Elemente und/oder Strukturen, wird also insbesondere die Längsversteifung zumindest über 30%, insbesondere 50%, vorzugsweise 100%, der Längserstreckung der wannenartigen Elemente ausschließlich durch die die wannenartigen Elemente beinhaltenden Monocoques und/oder die Deckelemente realisiert., .

Insbesondere sind/werden zumindest über 30%, insbesondere 50%, vorzugsweise 100%, der Längserstreckung der wannenartigen Elemente keine versteifenden und/oder tragenden Elemente neben den außenliegenden Seitenwänden der wannenartigen Elemente angeordnet. Die außenliegenden Seitenwände sind die, die nicht zu einem anderen wannenartigen Element zugewandt sind.

Mit besonderem Vorteil sind die Deckplatten und/oder Verstrebungsdeckelemente abgesehen von Aussparungen, beispielsweise für Radkästen oder Durchführungen, Kabelführungen, Kabeltunnel und/oder abgesehen von lokalen Verstärkungen, insbesondere für die Anbindung von Wänden, beispielsweise durch ein umlaufendes Profil für die Anbinddung von Außenwänden, und Innenausbauten, wie Regalen und/oder abgesehen von einer die Homogenität im kleinen Maßstab brechenden Wabenstruktur , und/oder Auskragungen nach oben für Radkästen in der flächigen Erstreckung homogen ausgeführt. Sie weisen insbesondere abgesehen von den genannten Ausnahmen keine Verstärkungen und/oder Versteifungen auf.

In Bezug auf eine Homogenität in der flächigen Erstreckung der Deckelemente ist ein Schichtaufbau unbeachtlich, da die Schichten senkrecht zur flächigen Erstreckung übereinander angeordnet sind. Die Homogenität wird im kleinen Maßstab durch eine Wabenstruktur dadurch gebrochen, dass die Waben Wände und Hohlräume oder Wände und abweichend gefüllte Zwischenräume aufweisen. Dies bleibt bei der Betrachtung, ob eine Homogenität vorliegt vorteilhafterweise unbeachtet.

Bevorzugt werden die Deckplatten und/oder Verstrebungsdeckelemente eben und/oder plattenartig ausgeführt. Sie weisen insbesondere keine umlaufenden Auskragungen und/oder entlang mindestens einer Seite verlaufenden, zumindest keine umlaufenden und/oder entlang mindestens einer Seite verlaufenden Auskragungen mit einer Höhe von mehr als 1cm, auf.

Mit besonderem Vorteil werden an die Deckelemente, insbesondere ausgeführt als ein einziges Verstrebungsdeckelement, umlaufend Seitenwände angebunden, insbesondere unter Verwendung eines umlaufenden L-förmigen Profils. Insbesondere werden die Seitenwände stirnseitig vor die das mindestens eine Deckelemente montiert und wird insbesondere diese Verbindung zwischen Seitenwand und Deckelemente von einem L-förmigen Profil umschlossen. Das L-förmige Profil ist dabei insbesondere so angeordnet, dass es auf der Innenseite seiner Schenkel Kontakt zu mindestens einer Seitenwand und zu mindestens einem Deckelement aufweist. Insbesondere weist das Verstrebungsdeckelement einen schichtförmigen Aufbau mit mindestens drei Schichten, von denen eine innere eine Schaumschicht und/oder Wabenschicht ist, auf oder befindet sich auf dem Verstrebungsdeckelement ein mindestens zweischichtiger Aufbau mit einer gedeckten Schaum- und/oder Wabenschicht. Durch die Anordnung der Seitenwände an den Stirnseiten des Verstrebungsdeckelements kann die Schaumschicht, die an den Stirnseiten ansonsten offen liegen würde allseitig umschlossen werden. In Bezug auf die verschiedenen Abschnitte der Monocoques in ihrer Längserstreckung ist auszuführen, dass diese in verschiedenartigen Anordnungen und Längenverhältnissen gewählt werden können. Es wird besonders bevorzugt, den ersten Abschnitt an einem und/oder dem ersten Ende des jeweiligen Monocoques oder im Bereich von 20% der Längserstreckung des jeweiligen Monocoques ausgehend von einem und/oder dem ersten Ende beginnend anzuordnen. Auch die sich verringernde Erstreckung des dritten Abschnittes kann auf verschiedene Arten realisiert werden. Sie kann sprunghaft erfolgen oder beispielsweise durch eine Verjüngung oder kontinuierliche Verjüngung realisiert werden. Ausgeschlossen sind auch nicht andersartige Verformungen, wie beispielsweise eine zwischenzeitliche Verbreiterung des Monocoques, beispielsweise im dritten Abschnitt. Auch kann der Monocoque weitere Abschnitte aufweisen.

Die Monocoques sind voneinander beabstandet, insbesondere um 0,5 bis 2 m. Insbesondere sind sie um mindestens die größte Breite eines der Monocoques und/oder des Abstandes zwischen den Seitenwänden eines Monocoques, insbesondere um das Doppelte der größten Breite eines der Monocoques und/oder des Abstandes zwischen den Seitenwänden eines Monocoques voneinander beabstandet. Dabei erstreckt sich die Breite in Richtung des Abstandes zwischen einem ersten und einem zweiten der zwei Monocoques.

Die wannenartigen Elemente weisen insbesondere eine untere Breite des Bodens von 5 bis 30 cm auf. Die daran anschleißenden Flanken, die insbesondere in einem Winkel von 0 bis 20° verlaufen. Dabei ist der Winkel gemessen innen im wannenartigen Element zwischen Boden und Flanke. Die Länge und/oder Höhe der Flanken beträgt insbesondere 5 bis 50 cm. Vorteilhafterweise beträgt die Wandstärke der wannenartigen Elemente auf mindestens 80% ihrer Länge, insbesondere über ihre gesamte Erstreckung, 2 bis 15 mm. Die wannenartigen Elemente sind insbesondere einteilig ausgeführt. Sie weisen insbesondere über Ihre Längserstreckung keine Fügestellen, an denen zwei oder mehr in Längsrichtung aneinander grenzende Teile mit oder ohne Überlappung verbunden wurden, auf. Ein Faserverbundteil, das aneinandergefügte Fasern oder Fasermatten aufweist gilt dabei nicht als zwei Teile, die in Längserstreckung eine Fügestelle aufweisen. Das Gewicht des Duocoques, gebildet insbesondere aus zwei wannenartigen Elementen und einem oder mehreren Verstrebungsdeckelementen und wahlweise einer oder mehreren Querverstrebungen, beträgt insbesondere weniger als 5% , insbesondere weniger als 2%, des zulässigen Gesamtgewichts des Untergestells und/oder des Fahrzeuges dessen Teil das Untergestell werden soll oder ist. Es wiegt insbesondere nicht mehr als 120 kg für ein Fahrzeug mit bis zu 4,25t zulässigem Gesamtgewicht.

Des Weiteren ist mit besonderem Vorteil mindestens eine zwischen den zwei Monocoques verlaufende mittlere Querverstrebung vorzusehen. Die mindestens eine vorteilhafte mittlere Querverstrebung ist insbesondere mit den zwei Monocoques und/oder dem mindestens einen Verstrebungsdeckelement fest verbunden, insbesondere über Bindemittel.

Als mittlere Querverstrebungen kommen verschiedenartige Konstruktionen in Frage. Hier können auch Verstrebungen aus anderen Materialien als die der Monocoques verwendet werden. In einer möglichen Ausführungsvariante werden Querverstrebungen vorgesehen, die ebenfalls aus demselben Material wie die Monocoques gefertigt sind und/oder ebenfalls einen Boden und davon sich nach oben erstreckende zwei Seitenwände aufweisen, insbesondere im Querschnitt identisch zu den wannenartigen Elementen ausgebildet und/oder im selben kontinuierlichen Verfahren hergestellt wurden wie mindestens eins der wannenartigen Elemente und insbesondere ebenfalls an der Oberseite verschlossen sind, insbesondere durch eines der Deckelemente der Monocoques, insbesondere durch das mindestens eine Verstrebungsdeckelement. Dabei wird ein Verschluss von mindestens 50% bevorzugt.

Mit besonderem Vorteil weisen die zwei Monocoques über ihre Längserstreckung nur den ersten Abschnitt, den daran angrenzenden dritten Abschnitt und den an den dritten Abschnitt angrenzenden zweiten Abschnitt auf. Generell ist der zweite Abschnitt, mit seiner größeren Breite, insbesondere vorgesehen um die Querstabilität des Untergestells zu erhöhen. Im Bereich des ersten Abschnittes kann eine ausreichende Querstabilität in der Regel durch eine an ihr angebrachte weitere Konstruktion, die insbesondere einen Vorderteil eines Gesamtuntergestells bildet, realisiert werden.

Weist es weitere Abschnitte, wie beispielsweise einen an den zweiten Abschnitt angrenzenden vierten Abschnitt auf, so können weitere Funktionalitäten eingebracht werden. Beispielsweise kann ein endständiger Böschungswinkel vorteilhafterweise in den Monocoques derart vorgesehen sein, dass sich ihre Höhe vom Boden her zum Deckelement ansteigend verringert. Mit besonderem Vorteil ist die mindestens eine mittlere Querverstrebung oder bei mehreren mittleren Querverstrebungen zumindest eine dieser mittleren Querverstrebungen als einteiliges wannenartiges Element aufweisend mindestens einen Boden und zwei sich vom Boden aufwärts erstreckenden Seitenwände und mindestens ein das wannenartige Element über mindestens 50% der Längserstreckung des wannenartigen Elementes verschließendes Deckelement ausgebildet. Dabei ist das Deckelement mit den Seitenwänden, efindungsgemäss über Bindemittel, fest verbunden. Insbesondere ist das mindestens eine Deckelement, insbesondere einteilig mit ihm ausgebildetes, Teil des mindestens einen Verstrebungsdeckelementes. Insbesondere können die mittleren Querverstrebungen wannenartige Elemente aufweisen, die ausgebildet sind wie ein Bereich der wannenartigen Elemente eines Monocoques.

Mit besonderem Vorteil sind mindestens zwei mittlere Querverstrebungen vorgesehen. So kann, sofern die mittleren Querverstrebungen in einem entsprechenden Abstand angeordnet sind, eine ausreichende Querstabilität über die gesamte Länge des Untergestells realisiert werden.

Mit besonderem Vorteil ist ein vierter Abschnitt vorgesehen, der sich an den zweiten Abschnitt anschließt oder an einem dem ersten Abschnitt gegenüberliegenden Ende des Monocoques angeordneten Ende angeordnet ist. Dieser Abschnitt, oder der zweite Abschnitt, insbesondere wenn dieser endständig über die Längserstreckung des Monocoques angeordnet ist, verjüngt sich mit besonderem Vorteil zum vom ersten Ende der Längserstreckung abgewandten Ende hin in der Höhe und/oder der inneren freien Höhe. Dabei erfolgt die Verjüngung insbesondere so, dass der Boden in Richtung des mindestens einen Deckelementes ansteigt. Unter der inneren freien Höhe ist die Höhe zu verstehen, die sich bei einem innen hohlen Monocoque innerhalb dessen als freie Höhe ergibt. Weist der Monocoque im Querschnitt somit umlaufende Wände auf, ist der innere freie Raum in diesem Querschnitt als innere freie Höhe zu verstehen.

Mit besonderem Vorteil ist der vierte und/oder der dritte Abschnitt zu dem in Längsrichtung vom ersten Ende abgewandten Ende hin in einer Mittelebene, insbesondere allen Mittelebenen durch die zwei Monocoques parallel zu deren Längserstreckung der zwei Monocoques senkrecht zur Längserstreckung des Monocoques in seiner äußeren und/oder inneren freien Erstreckung und/oder im Querschnitt und/oder im inneren freien Querschnitt verjüngt ausgebildet. Bei einer solchen Ausführung befindet sich die Verjüngung der Erstreckung oder inneren freien Erstreckung in der Breite des Monocoques. Durch eine solche Ausgestaltung lässt sich zum Einen Material am weniger belasteten Bereich, insbesondere eines Endes des Monocoques, einsparen und kann zum Anderen eine freiere Beweglichkeit des Fahrzeuges im Gelände ermöglicht werden, da die Monocoques dann zum Ende des Fahrzeuges hin eine verringerte Abmessung aufweisen und somit eine Kollisionsgefahr verringert werden kann.

Mit besonderem Vorteil weist der zweite Abschnitt in allen Mittelebenen durch die zwei Monocoques parallel zu deren Längserstreckung der zwei Monocoques senkrecht zur Längserstreckung des Monocoques eine größere Erstreckung auf, als der erste Abschnitt. Somit weist er eine größere Breite auf. Mit besonderem Vorteil weist der dritte Abschnitt jedes Monocoques in allen Mittelebenen über seine Längserstreckung vom zweiten zum ersten Abschnitt eine sich kontinuierlich verjüngende Erstreckung, also Breite, auf. Gleiches gilt auch für die innere freie Erstreckung sowie den Querschnitt der Abschnitte. Mit besonderem Vorteil sind des Weiteren die Böden und Seitenwände der Monocoques jeweils mit über die Längserstreckung gleichbleibender Wandstärke ausgebildet.

Mit besonderem Vorteil sind auch die Wandstärken der Böden und Seitenwände der Monocoques identisch ausgeführt. Mit besonderem Vorteil sind des Weiteren die Erstreckung, die innere freie Erstreckung, der äußere Querschnitt und/oder der innere freie Querschnitt des ersten und/oder zweiten Abschnittes über die Längserstreckung des jeweiligen Abschnittes konstant. Mit besonderem Vorteil ist die Erstreckung, die innere freie Erstreckung, der äußere Querschnitt und/oder der innere freie Querschnitt des ersten Abschnittes von der Erstreckung, der inneren freien Erstreckung, dem äußeren Querschnitt bzw. dem inneren freien Querschnitt des zweiten Abschnittes mindestens um den Faktor zwei unterschiedlich ausgebildet. Der zweite Abschnitt weist eine jeweils größere Erstreckung bzw. einen größere Querschnitt auf.

Mit besonderem Vorteil ist die Höhe der Erstreckung der Monocoques und der mittleren Querverstrebungen zwischen den Böden und den Deckelementen identisch. Sie weisen also insbesondere eine identische Höhe, insbesondere identische maximale Höhe, auf. Insbesondere können die Monocoques und/oder Querverstrebungen auch Bereiche aufweisen, die eine geringere Höhe aufweisen, insbesondere dadurch, dass sich die Böden in Richtung der Deckelemente wölben. Dies ist insbesondere vorteilhaft zur Unterbringung weiterer Bestandteile, wie Durchführungen, Wellen und/oder Achsen.

Somit weisen insbesondere die Monocoques vorteilhafterweise jeweils mindestens einen Achsabschnitt auf, in denen der Boden der Monocoques eine Wölbung in Richtung des mindestens einen Deckelementes aufweist. Hier weisen die Monocoques in diesem Achsabschnitt somit eine verringerte minimale Höhe auf, wobei insbesondere die Oberkante der Seitenwände auf einer Ebene verbleibt und sich lediglich der Boden nach oben wölbt. Mit besonderem Vorteil sind die Seitenwände in diesem Bereich ebenfalls so ausgeführt, dass sich ihre Unterkante analog zur Wölbung des Bodens ebenfalls nach oben wölbt und somit ein freier Bereich im Achsabschnitt entsteht.

Mit besonderem Vorteil ist die mindestens eine mittlere Querverstrebung in ihrer Längserstreckung senkrecht zur Längserstreckung der Monocoques angeordnet. Eine als Wanne ausgebildete mittlere Querverstrebung, beispielsweise zur Aufnahme von Akkus oder Tanks, ist insbesondere mit ihrer Längserstreckung parallel zur Längserstreckung der Monocoques anzuordnen. Sie ist insbesondere mit ihrer Quererstreckung senkrecht zur Längserstreckung der Monocoques anzuordnen.

Mit besonderem Vorteil sind die Monocoques, abgesehen von inneren Querverstrebungen, die Verstärkungselemente darstellen, hohl ausgebildet. Derartige innere Querverstrebungen, die Verstärkungselemente darstellen, sind insbesondere im zweiten Abschnitt jedes Monocoques angeordnet, insbesondere mindestens zwei pro Monocoques. Derartige Querverstrebungen sind insbesondere als insbesondere senkrecht zur Längserstreckung der Monocoques und/oder diagonal sich zwischen den Seitenwänden der wannenartigen Elemente erstreckend angeordnete flächige Querverstrebungen, beispielsweise schottblech- oder schottwandartig, ausgebildet und insbesondere in Bereichen angeordnet, in denen Achsen unter dem Untergestell zu montieren sind bzw. montiert sind. Sie dienen zur weiteren Verstärkung in Quer- und/oder Längsrichtung, beispielsweise im Bereich der Achsen. Insbesondere weisen Achsabschnitte innere Querverstrebungen auf und/oder sind innere Querverstrebungen angrenzend zu Achsabschnitten, insbesondere beidseitig, in den Monocoques angeordnet.

Auch wenn die Monocoques insbesondere, mit Ausnahme der inneren Querverstrebungen, an sich hohl ausgeführt sind, ist es denkbar, in diesen weitere funktionale Elemente aufgenommen anzuordnen. So können innerhalb der an sich hohlen Monocoques auch Leitungen, Steuerungen, Speicher, Aktuatoren, Messinstrumente und/oder andere funktionale Elemente angeordnet bzw. verlegt sein.

Auch die eine oder mehreren mittlere(n) Querverstrebung(en) ist/sind, sofern solche vorgesehen sind, mit besonderem Vorteil innen hohl ausgebildet. Dies gilt für die tragende Konstruktion der Querverstrebung. Diese ist auch hohl ausgebildet, wenn innerhalb dieser beispielsweise andere Elemente, wie beispielsweise Tanks, Kompressoren, Leitungen, Steuerungen, Speicher, Aktuatoren, Messinstrumente und/oder andere funktionale Elemente angeordnet sind.

Mit besonderem Vorteil ist in Längserstreckung der Monocoques die Länge des dritten Abschnittes geringer als die Länge des zweiten Abschnittes, insbesondere auch als des ersten Abschnittes. Mit besonderem Vorteil beträgt die Länge des ersten und/oder die Länge des dritten Abschnittes jedes Monocoques jeweils mindestens 10% der Länge des Monocoques. Mit besonderem Vorteil beträgt die Länge des zweiten Abschnittes jedes Monocoques mindestens 20% der Länge des Monocoques.

Durch eine derartige Anordnung kann eine besonders gewichtseffiziente Ausbildung erreicht werden.

Mit besonderem Vorteil sind die Monocoques an mindestens fünf Seiten, insbesondere fünf Seiten, geschlossen. Insbesondere sind sie am ersten Ende offen ausgebildet.

Mit besonderem Vorteil sind die Monocoques identisch und/oder spiegelsymmetrisch ausgeführt. Dies erleichtert die Fertigung und stellt eine besonders materialeffiziente Ausführung dar. Mit besonderem Vorteil sind ihre Böden auf einer gemeinsamen Ebene angeordnet. Somit ist insbesondere ihre maximale Erstreckung nach unten auf einer gemeinsamen Ebene angeordnet. Des Weiteren sind die zwei Monocoques insbesondere spiegelbildlich zu einer Ebene senkrecht zur gemeinsamen Ebene angeordnet. Dies bedeutet, dass die Monocoques nicht nur parallel angeordnet sind, sondern möglichst symmetrisch platziert angeordnet sind. Insbesondere bilden ihre Längserstreckungen zusammen mit Verbindungslinien zwischen den jeweiligen Enden der Längserstreckungen der zwei Monocoques, also eines ersten Ende der Längserstreckung des ersten Monocoques mit einem ersten Ende der Längserstreckung des zweiten Monocoques und eine Verbindungslinien zwischen dem zweiten Ende der Längserstreckung des ersten Monocoques und dem zweiten Ende der Längserstreckung des zweiten Monocoques ein in einer Ebene angeordnetes Rechteck aus.

Mit besonderem Vorteil ist die Höhe der Monocoques und/oder der mittleren Querverstrebungen und/oder der Abstand der Böden der Monocoques und/der mittleren Querverstrebungen zum Deckelement, mit Ausnahme der Achsabschnitte, konstant. Mit besonderem Vorteil sind die Seitenwände der Monocoques und/oder mittleren Querverstrebungen so angeordnet, dass sie sich vom Boden aufwärts in Richtung des mindestens einen Deckelements leicht voneinander entfernend nach außen erstrecken, also einen gewissen Öffnungswinkel aufweisen. Darüber hinaus weisen die Seitenwände eines jeden Monocoques und/oder die Seitenwände der mindestens einen mittleren Querverstrebung sich jeweils nach außen erstreckende Klebeflächen auf, die insbesondere zueinander und/oder zum Boden und/oder Deckelement angeordnet parallel sind. Insbesondere ist das mindestens eine Deckelement mit dem wannenartigen Element durch Bindemittel über die Klebeflächen fest verbunden.

Mit besonderem Vorteil weisen die Klebeflächen über die Längserstreckung der Monocoques und/oder mittleren Querverstrebungen jeweils eine konstante Breite auf. Insbesondere ist die Breite der Klebeflächen der Monocoques identisch zur Breite der Klebeflächen der mittleren Querverstrebungen.

Durch eine solche Art der Verbindung von wannenartigem Element und Deckelement lässt sich eine besonders materialeffiziente und steife Verbindung realisieren.

Mit besonderem Vorteil ist das selbsttragende Untergestell überwiegend gebildet aus Faserverbundwerkstoff, insbesondere aus Carbonfaserverbundwerkstoff. Insbesondere ist es ausschließlich aus Faserverbundwerkstoff, insbesondere aus Carbonfaserverbundwerkstoff und Bindemittel gebildet.

Mit besonderem Vorteil ist das wannenartige Element einer der mittleren Querverstrebungen, insbesondere der vom ersten Ende abgewandten und/oder einer im Bereich des zweiten Abschnittes angeordneten mittleren Querverstrebung, ein solches, dessen Längserstreckung und insbesondere innere freie Längserstreckung in Längserstreckung der Monocoques angeordnet ist und insbesondere größer ist als der Abstand zwischen den zwei Monocoques voneinander. Eine solche mittlere Querverstrebung eignet sich insbesondere zur Aufnahme von Tanks und/oder Akkus.

Mit besonderem Vorteil sind drei mittlere Querverstrebungen vorgesehen. Dabei sind insbesondere zwei schmalere mittlere Querverstrebungen zwischen den ersten Abschnitten der Monocoques angeordnet und ist insbesondere eine breitere, insbesondere als Querverstrebung mit langer Wanne ausgebildete Querverstrebung zwischen den Monocoques vom ersten Ende abgewandt, insbesondere auch oder ausschließlich im Bereich des zweiten Abschnittes, angeordnet. Eine Querverstrebung mit langer Wanne ist insbesondere nicht unmittelbar mit den wannenartigen Elementen der Monocoques, sondern insbesondere über Klebeflächen mit dem Deckelement verbunden.

Mit besonderem Vorteil ist zumindest zwischen den zweiten Abschnitten und/oder den ersten Abschnitten jeweils mindestens eine mittlere Querverstrebung vorgesehen.

Die maximale Höhe der Monocoques beträgt insbesondere mindestens 100 mm. Insbesondere beträgt die Höhe der Monocoques über mindestens 50% ihrer Länge mindestens 100 mm.

Mit besonderem Vorteil beträgt die maximale Höhe der Seitenwände der Monocoques mindestens 100 mm, insbesondere beträgt die Höhe der Seitenwände über mindestens 50% der Länge der Monocoques mindestens 100 mm.

Mit besonderem Vorteil beträgt die minimale Dicke des Verstrebungsdeckelementes mindestens 2 mm.

Mit besonderem Vorteil beträgt die innere freie Erstreckung der Monocoques im ersten Abschnitt 40-300 mm und/oder im zweiten Abschnitt 80-600 mm. Mit besonderem Vorteil beträgt die äußere Erstreckung, die äußere Breite, der Monocoques im ersten Abschnitt mindestens 80 mm und/oder maximal 300 mm und/oder im zweiten Abschnitt mindestens 100 mm und/oder maximal 900 mm. Mit besonderem Vorteil beträgt der Abstand zwischen den Monocoques mindestens 400 mm. Mit besonderem Vorteil beträgt der Abstand zwischen den zueinander gerichteten Seitenwänden der Monocoques mindestens 400 mm, insbesondere beträgt der Abstand zwischen den zueinander gerichteten Seitenwänden der Monocoques mindestens das Doppelte der inneren freien Erstreckung am Ort des minimalen Abstandes zwischen den Seitenwänden der Monocoques, die zueinander gerichtet sind.

Mit besonderem Vorteil beträgt die Länge jedes Monocoques mindestens 1 m.

Gelöst wird die Aufgabe auch durch ein Landfahrzeug, aufweisend ein erfindungsgemäßes Untergestell, wobei am ersten Ende ein Fahrzeugelement als angebundene Konstruktion, aufweisend mindestens eine Vorderachse angebracht, insbesondere verschraubt und/oder verklebt ist. Gelöst wird die Aufgabe auch durch ein Landfahrzeug, aufweisend ein erfindungsgemäßes Untergestell, wobei innerhalb mindestens einer mittleren Querstrebe, insbesondere einer als lange Wanne ausgebildeten, mindestens ein Akku und/oder ein Tank aufgenommen ist.

Weitere vorteilhafte Ausbildungen und Merkmale sollen rein exemplarisch und nicht abschließend anhand der rein schematischen und nicht beschränkenden Zeichnungen erläutert werden. Dabei zeigt:
- Fig. 1: eine Ansicht eines erfindungsgemäßen Fahrgestells, jedoch mit durchsichtigem Deckelemente;
- Fig. 2: eine Darstellung Wanne eines Monocoques aus Fig. 1; und
- Fig. 3: eine Darstellung eines Untergestells ohne Deckelement.

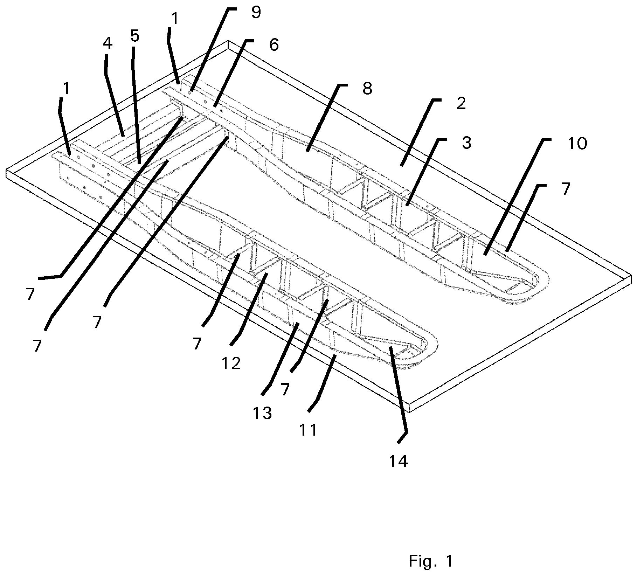

Fig. 1 zeigt eine Darstellung eines erfindungsgemäßen Untergestells mit durchsichtigem Deckelemente.

Zu erkennen ist ein wannenartiges Element 1 eines ersten Monocoques sowie ein wannenartiges Element 1 eines zweiten Monocoques. Darauf ist ein Deckelement 2 angeordnet. Diese sind parallel zueinander beabstandet angeordnet. Zwischen diesen und mit diesen verbunden sind zwei mittlere Querverstrebungen gezeigt. Eine der mittleren Querverstrebungen ist als im Querschnitt rechteckige Querverstrebung 4 ausgeführt. Die zweite mittlere Querverstrebung ist als wannenartiges Element 5, dass ebenfalls vom Deckelement 2 verschlossen und mit diesem über Klebeflächen 7 mit Bindemittel verbunden ist, ausgeführt. Die Querverstrebung 4 und das wannenartige Element 5 sind über Klebeflächen 7 mit Bindemittel mit den wannenartigen Elementen 1 der Monocoques verbunden. Die wannenartigen Elemente 1 der Monocoques sind an vier Seiten geschlossen und weisen einen Boden 14, zwei Seitenwände 13 und Klebeflächen 7 auf. Die wannenartigen Elemente 1 der Monocoques und somit die Monocoques selbst weisen einen ersten Abschnitt 6, einen zweiten Abschnitt 3 und einen dritten Abschnitt 8 sowie einen vierten Abschnitt 10 auf. Der erste Abschnitt 6 ist schmaler als der zweite Abschnitt 3. Der dritte Abschnitt 8verjüngt sich vom dritten Abschnitt 3 zum ersten Abschnitt 6. Der vierte Abschnitt verjüngt sich in seiner Breite und Höhe. Zur Verjüngung in der Höhe verläuft der Boden 14 in einem Böschungswinkel 11 nach oben. In den ersten Abschnitten, die an ein erstes Ende der wannenartigen Elemente 1 der Monocoques angrenzen, sind Vorrichtungen zur Verschraubung der Monocoques mit einer anzubindenden Konstruktion als einem weiterer Bestandteil eines Gesamtuntergestells in Form von Bohrungen 9 vorgesehen. Innerhalb der wannenartigen Elemente 1 der Monocoques sind in den zweiten Abschnitten 3 innere Querverstrebungen 12 angeordnet. Sie sind als flächige innere Querverstrebungen 12 ausgeführt und senkrecht zu der Längserstreckung der wannenartigen Elemente 1 der Monocoques angeordnet und mit diesen und dem Deckelement 2 über Klebeflächen 7 mit Bindemittel verbunden. Das Deckelement 2 ist durchgehend und auch über die wannenartigen Elemente 1 der Monocoques an allen Seiten hinausragend ausgeführt. Es kann auch derart zugeschnitten Sein, dass es zum Beispiel zwischen den wannenartigen Elementen 1, insbesondere an Stellen, an denen keine wannenartigen Elemente von mittleren Querverstrebungen angeordnet sind, Aussparungen aufweist.

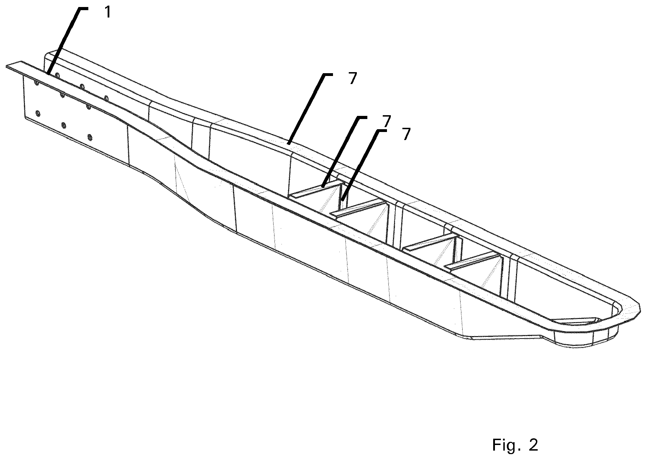

Fig. 2 zeigt ein wannenartiges Element 1 aus Fig. 1 mit inneren Querverstrebungen 12

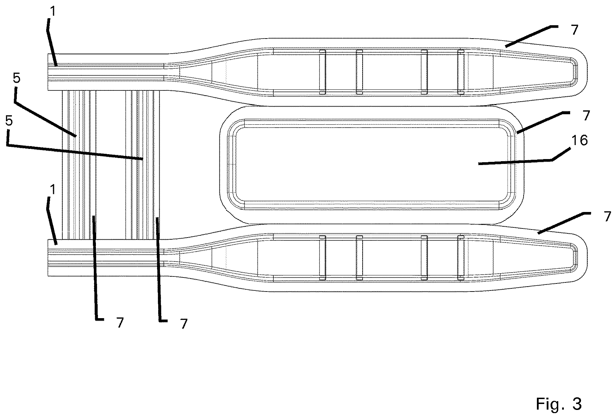

Fig. 3 Zeigt zwei wannenartige Elemente 1 zweier Monocoques, ausgebildet wie in den Figuren 1 und 2. Jedoch sind im vorderen Bereich zwei wannenartige Elemente 5 als Teil von mittleren Querverstrebungen zwischen den wannenartigen Elementen 1 der Monocoques angeordnet. Im Bereich der zweiten Abschnitte und teilweise im Bereich der dritten und vierten Abschnitte ist zwischen den wannenartigen Elementen 1 der Monocoques eine weiteres wannenartiges Element 16 ausgebildet als lange Wanne angeordnet. Die wannenartigen Elemente 1, 5, 16 weisen Klebeflächen 7 zur Verbindung mit einem Deckelement mittels Bindemittel auf.

## Patentansprüche

1. Selbsttragendes Untergestell für ein Fahrzeug, insbesondere Landfahrzeug, und/oder für ein Landfahrzeug aufweisend ein selbstragendes Untergestell,
wobei das Untergestell zwei parallel und voneinander beabstandet angeordnete, lang gestreckte und an mindestens vier Seiten zu mindestens 50% verschlossene Monocoques aufweist,
wobei die Monocoques jeweils ein einteiliges wannenartiges Element (1) aufweisend
mindestens einen unteren Boden (14) und zwei sich vom Boden aufwärts erstreckende Seitenwände (13) und
mindestens ein die wannenartigen Elemente über mindestens 50% der Längserstreckung des jeweiligen wannenartigen Elements verschließendes Deckelement (2) aufweist,
wobei das mindestens eine Deckelement eines jeden der zwei Monocoques jeweils mindestens ein Verstrebungsdeckelement (2) beinhaltet und
die Verstrebungsdeckelemente der zwei Monocoques als gemeinsames, einen zwischen den wannenartigen Elementen der Monocoques liegenden Zwischenraum überspannendes, einteiliges Verstrebungsdeckelement ausgebildet sind
und die Deckelemente mit den Seitenwänden der Monocoques durch Bindemittel fest verbunden sind
wobei die wannenartigen Elemente jeweils einteilig und vollständig aus Faserverbundwerkstoff geschaffen sind.

2. Selbsttragendes Untergestell und/oder Landfahrzeug nach Anspruch 1, wobei die Monocoques jeweils einen ersten Abschnitt (6) und einen zweiten Abschnitt (3) aufweisen, wobei der zweite Abschnitt in einer Mittelebene durch die zwei wannenartigen Elemente der Monocoques parallel zu den Längserstreckungen der wannenartigen Elemente der zwei Monocoques senkrecht zur Längserstreckung des wannenartigen Elements des Monnocoques eine größere Erstreckung aufweist als der erste Abschnitt und wobei jeder Monocoque einen in Richtung der Längserstreckung seines wannenartigen Elements zwischen dem ersten und zweiten gelegenen dritten Abschnitt (8) aufweist, der über die Längserstreckung seines wannenartigen Elements vom zweiten zum ersten Abschnitt eine sich verringernde Erstreckung aufweist und insbesondere die zwei Monocoques über Ihre Längserstreckung nur den ersten Abschnitt, den daran angrenzenden dritten Abschnitt und den an den dritten Abschnitt angrenzenden zweiten Abschnitt aufweisen.

3. Selbsttragendes Untergestell nach Anspruch 2, wobei die zwei Monocoques über Ihre Längserstreckung nur den ersten Abschnitt, den daran angrenzenden dritten Abschnitt und den an den dritten Abschnitt angrenzenden zweiten Abschnitt und einen vierten Abschnitt aufweisen.

4. Selbsttragendes Untergestell nach einem der vorstehenden Ansprüche, mit mindestens einer zwischen den zwei Monocoques verlaufenden mittleren Querverstrebungen, wobei die mindestens eine mittleren Querverstrebung mit den zwei Monocoques fest verbunden ist.

5. Selbsttragendes Untergestell nach Anspruch 4 wobei die mindestens eine mittlere Querverstrebung ein einteiliges wannenartiges Element aufweisend mindestens einen unteren Boden und zwei sich vom Boden aufwärts erstreckende Seitenwände und mindestens ein das wannenartige Elemente über mindestens 50% der Längserstreckung des jeweiligen wannenartigen Elements verschließendes Deckelement aufweist und das Deckelement mit den Seitenwänden, insbesondere über Bindemittel, fest verbunden ist, wobei das mindestens eine Deckelement insbesondere Teil des mindestens einen Verstrebungsdeckelements ist.

6. Selbsttragendes Untergestell nach einem der vorstehenden Ansprüche, wobei die Monocoques abgesehen von den inneren Querverstrebungen, die Verstärkungselemente darstellen, ausgebildet sind und/oder die Monocoques an fünf Seiten geschlossen sind.

7. Selbsttragendes Untergestell nach einem der vorstehenden Ansprüche, wobei die wannenartigen Elemente über maximal 70%, insbesondere maximal 50%, ihrer Längserstreckung Verstärkungselemente oder Anbindungselemente für Verstärkungselemente aufweisen.

8. Selbsttragendes Untergestell nach nach Anspruch 4 oder Anspruch 5 und/ oder Anspruch 6 wobei die inneren und/oder mittleren Querverstrebungen senkrecht zur Längserstreckung des Monocoques angeordnet sind.

9. Selbsttragendes Untergestell und/oder Landfahrzeug nach einem der vorstehenden Ansprüche, wobei die zwei Monocoques identisch ausgeführt sind und ihre Böden auf einer gemeinsamen Ebene angeordnet sind und die zwei Monocoques spiegelbildlich zu einer Ebene senkrecht zur gemeinsamen Ebene angeordnet sind.

10. Selbsttragendes Untergestell und/oder Landfahrzeug nach einem der vorstehenden Ansprüche, wobei die wannenartige Elemente von den Böden abgewandten Enden der Seitenwände zueinander parallele und insbesondere sich von den Seitenwänden nach außen erstreckenden, Klebeflächen aufweisen, wobei das Deckelement mit den wannenartigen Elementen durch das Bindemittel über die Klebeflächen verbunden sind.

11. Selbsttragendes Untergestell und/oder Landfahrzeug nach dem vorstehenden Anspruch und nach Anspruch 4 oder Anspruch 8,- wenn letzterer sich auf Anspruch 4 bezieht, wobei die Klebeflächen über die Längserstreckungen der Monocoques und/oder mittleren Querverstrebungen eine konstante Breite aufweisen.

12. Selbsttragendes Untergestell und/oder Landfahrzeug nach einem der vorstehenden Ansprüche, wobei am ersten Ende ein Fahrzeugelement aufweisend mindestens eine Vorderachse, insbesondere ein Triebkopf, angebracht, insbesondere verschraubt, und/oder die Monocoques im ersten Abschnitt oder am ersten Ende Vorrichtungen zur Verschraubungen mit einem Untergestell oder einer Kabine aufweisen ist.

13. Verfahren zur Herstellung eines selbsttragenden Untergestells für ein Landfahrzeug aufweisend die folgenden Schritte zur Herstellung des Untergestells:
- Bereitstellen zweier lang gestreckter wannenartiger Elemente aufweisend mindestens einen unteren Boden (14) und zwei sich vom Boden aufwärts erstreckende Seitenwände (13) und
- Bereitstellen mindestens eines Verstrebungsdeckelements und
- Verbinden der mindestens drei Elemente durch, sodass die wannenartigen Abschnitte oder wannenartigen Elemente parallel zueinander angeordnet sind und teilweise durch das Verstrebungsdeckelement verschlossen werden,
wobei die wannenartigen Element von Deckelementen und/oder dem mindestens einen Verstrebungsdeckelement zu mindestens 50% verschlossen werden und
zwei zueinander parallele Monocoques ausgebildet werden und
wobei die Elemente so angeordnet werden, dass das mindestens eine Verstrebungsdeckelement einen zwischen den wannenartigen Elementen liegenden Zwischenraum überspannt und das mindestens eine Verstrebungsdeckelement mit den Seitenwänden der Monocoques fest verbunden ist,
wobei die wannenartigen Elemente jeweils einteilig und vollständig aus Faserverbundwerkstoff geschaffen sind.

14. Verfahren nach dem vorstehenden Anspruch beinhaltend die Herstellung der wannenartigen Elemente und/oder Abschnitte durch ein Pultrusionsverfahren.

15. Verfahren zur Herstellung eines Landfahrzeugs nach einem der Ansprüche 13 bis 14 beinhaltend die Herstellung eines Landfahrzeuges mit Fahrgestell mit dem Untergestell als Fahrgestell oder Teil des Fahrgestells.

## Claims

1. A self-supporting underframe for a vehicle, in particular a land vehicle, and/or for a land vehicle comprising a self-supporting underframe wherein the underframe comprises two elongated monocoques arranged parallel and spaced from each other and closed on at least four sides by at least 50%,
wherein the monocoques each comprise a one-piece trough-like element (1)
at least one lower floor (14) and two side walls (13) extending upwards from the floor, and
has at least one cover element (2) closing the trough-like elements over at least 50% of the longitudinal extension of the respective trough-like element
wherein the at least one ceiling element of each of the two monocoques includes at least one bracing ceiling element (2) and
the bracing ceiling elements of the two monocoques are designed as a common, one-piece bracing ceiling element spanning a space between the trough-like elements of the monocoques
and the cover elements are firmly connected to the side walls of the monocoques by means of binding agents
whereby the trough-like elements are each made in one piece and entirely of fibre composite material.

2. The self-supporting underframe and/or land vehicle according to claim 1, wherein the monocoques each comprise a first section (6) and a second section (3). wherein the second section has a greater extension than the first section in a central plane through the two trough-like elements of the monocoques parallel to the longitudinal extensions of the trough-like elements of the two monocoques perpendicular to the longitudinal extension of the trough-like element of the monocoque, and wherein each monocoque has a third section (8) located between the first and second sections in the direction of the longitudinal extension of its trough-like element, which has a decreasing extension over the longitudinal extent of its trough-shaped element from the second to the first section, and in particular the two monocoques have only the first section, the third section adjacent thereto and the second section adjacent to the third section over their longitudinal extent.

3. The self-supporting underframe according to claim 2, whereby the two monocoques have only the first section, the third section adjacent thereto and the second section adjacent to the third section and a fourth section along their longitudinal extension.

4. The self-supporting underframe according to one of the above claims, having at least one central cross-brace extending between the two monocoques, the at least one central cross-brace being firmly attached to the two monocoques.

5. The self-supporting underframe according to claim 4,
wherein the at least one central transverse bracing comprises a one-piece trough-like element having at least one lower base and two side walls extending upwards from the base and at least one cover element closing the trough-like element over at least 50% of the longitudinal extent of the respective trough-like element and the cover element is firmly connected to the side walls, in particular via binding agent, wherein the at least one cover element is in particular part of the at least one bracing cover element.

6. The self-supporting underframe according to any of the above claims, the monocoques being formed apart from the internal cross-braces which are reinforcing elements and/or the monocoques being closed on five sides.

7. The self-supporting underframe according to one of the above claims, whereby the trough-like elements have reinforcing elements or connection elements for reinforcing elements over a maximum of 70%, in particular a maximum of 50%, of their longitudinal extension.

8. The self-supporting underframe according to claim 4 or claim 5 and/or claim 6, wherein the inner and/or middle transverse struts are arranged perpendicular to the longitudinal extension of the monocoque.

9. The self-supporting underframe and/or land vehicle according to any of the foregoing claims, wherein the two monocoques are identical and their bottoms are arranged on a common plane, and the two monocoques are arranged mirror-inverted to a plane perpendicular to the common plane

10. The self-supporting underframe and/or land vehicle according to one of the above claims, wherein the trough-like elements of the side walls facing away from the floors have adhesive surfaces parallel to one another and in particular extending outwards from the side walls, wherein the cover element is connected to the trough-like elements by the binder via the adhesive surfaces.

11. The self-supporting underframe and/or land vehicle according to the above claim and according to claim 4 or claim 8, if the latter refers to claim 4, wherein the bonding surfaces have a constant width over the longitudinal extensions of the monocoques and/or central cross bracing.

12. The self-supporting underframe and/or land vehicle according to one of the above claims, wherein at the first end a vehicle element comprising at least one front axle, in particular a power unit, is attached, in particular bolted, and/or the monocoques in the first section or at the first end comprise devices for bolting to an underframe or a cab.

13. A method of manufacturing a self-supporting underframe for a land vehicle comprising the following steps for manufacturing the underframe:
- providing two elongated trough-like elements having at least a lower bottom (14) and two side walls (13) extending upwardly from the bottom; and
- providing at least one strut cover element and
- connecting the at least three elements by so that the trough-like sections or trough-like elements are arranged parallel to each other and are partially closed by the bracing cover element,
wherein the trough-like elements are closed by ceiling elements and/or the at least one bracing ceiling element to at least 50% and
two parallel monocoques are formed and
wherein the elements are arranged such that the at least one strut cover element spans a space between the trough-like elements and the at least one bracing ceiling element is firmly attached to the side walls of the monocoques,
whereby the trough-like elements are each made in one piece and entirely of fibre composite material.

14. The method according to the above claim comprising the manufacture of the trough-like elements and/or sections by a pultrusion process.

15. The method for manufacturing a land vehicle according to one of the claims 13 to 14 including the production of a land vehicle with chassis with the underframe as chassis or part of the chassis.

## Revendications

1. Châssis autoporteur pour un véhicule, en particulier un véhicule terrestre, et/ou pour un véhicule terrestre comprenant un châssis autoporteur dans lequel le châssis comprend deux monocoques allongés, disposés parallèlement et espacés l'un de l'autre et fermés sur au moins quatre côtés par au moins 50%,
où les monocoques comprennent chacun un élément en forme d'auge d'une seule pièce (1)
au moins un plancher inférieur (14) et deux parois latérales (13) s'étendant vers le haut à partir du plancher, et
comporte au moins un élément de couverture (2) fermant les éléments en forme d'auge sur au moins 50 % de l'extension longitudinale de l'élément en forme d'auge respectif
dans lequel le ou les éléments de plafond de chacun des deux monocoques comprennent au moins un élément de plafond de contreventement (2) et
les éléments de plafond de contreventement des deux monocoques sont conçus comme un élément de plafond de contreventement commun, d'une seule pièce, couvrant un espace entre les éléments en forme d'auge des monocoques
et les éléments de couverture sont solidement reliés aux parois latérales des monocoques au moyen de liants
où les éléments en forme d'auge sont chacun fabriqués d'une seule pièce et entièrement en matériau composite à base de fibres.

2. Châssis autoporteur et/ou véhicule terrestre selon la revendication 1, dans lequel les monocoques comprennent chacun une première section (6) et une deuxième section (3). dans lequel la deuxième section a une plus grande extension que la première section dans un plan central à travers les deux éléments en forme de gouttière des monocoques parallèlement aux extensions longitudinales des éléments en forme de gouttière des deux monocoques perpendiculairement à l'extension longitudinale de l'élément en forme de gouttière de la monocoque, et dans laquelle chaque monocoque présente une troisième section (8) située entre la première et la deuxième section dans la direction de l'extension longitudinale de son élément en forme d'auge, qui présente une extension décroissante sur l'étendue longitudinale de son élément en forme d'auge de la deuxième à la première section, et en particulier les deux monocoques ne présentent que la première section, la troisième section qui lui est adjacente et la deuxième section qui est adjacente à la troisième section sur leur étendue longitudinale.

3. Châssis autoporteur selon la revendication 2, dans lequel les deux monocoques ne comportent que la première section, la troisième section adjacente à celle-ci et la deuxième section adjacente à la troisième section et une quatrième section le long de leur extension longitudinale.

4. Châssis autoporteur selon l'une des revendications ci-dessus, présentant au moins un croisillon central s'étendant entre les deux monocoques, ledit au moins un croisillon central étant fermement fixé aux deux monocoques.

5. Châssis autoporteur selon la revendication 4,
dans lequel ledit au moins un contreventement transversal central comprend un élément en forme de cuvette d'une seule pièce avec au moins un fond inférieur et deux parois latérales s'étendant vers le haut à partir du fond et au moins un élément de couverture fermant l'élément en forme de cuvette sur au moins 50 % de l'étendue longitudinale de l'élément en forme de cuvette respectif et l'élément de couverture est relié de manière fixe aux parois latérales, en particulier par l'intermédiaire d'un liant, dans lequel ledit au moins un élément de couverture est en particulier une partie dudit au moins un élément de couverture de contreventement.

6. Châssis autoporteur selon l'une des revendications ci-dessus, les monocoques étant formées en dehors des croisillons internes qui sont des éléments de renforcement et/ou les monocoques étant fermées sur cinq côtés.

7. Châssis autoporteur selon l'une des revendications ci-dessus, dans lequel les éléments en forme de gouttière présentent des éléments de renforcement ou des éléments de liaison pour les éléments de renforcement sur au maximum 70 %, en particulier au maximum 50 %, de leur extension longitudinale.

8. Châssis autoporteur selon la revendication 4 ou la revendication 5 et/ou la revendication 6,
dans lequel les traverses intérieures et/ou centrales sont disposées perpendiculairement à l'extension longitudinale de la monocoque.

9. Châssis autoporteur et/ou véhicule terrestre selon l'une des revendications précédentes, dans lequel les deux monocoques sont identiques et leurs fonds sont disposés sur un plan commun, et les deux monocoques sont disposés de manière inversée par rapport à un plan perpendiculaire au plan commun.

10. Châssis autoporteur et/ou véhicule terrestre selon l'une des revendications ci-dessus, dans lequel les éléments en forme d'auge des parois latérales opposées aux sols présentent des surfaces adhésives parallèles entre elles et s'étendant en particulier vers l'extérieur à partir des parois latérales, dans lequel l'élément de couverture est relié aux éléments en forme d'auge par le liant via les surfaces adhésives.

11. Châssis autoporteur et/ou véhicule terrestre selon la revendication ci-dessus et selon la revendication 4 ou la revendication 8, si cette dernière se réfère à la revendication 4, dans lequel les surfaces de collage ont une largeur constante sur les extensions longitudinales des monocoques et/ou du contreventement central.

12. Châssis autoporteur et/ou véhicule terrestre selon l'une des revendications ci-dessus, dans lequel est fixé à la première extrémité un élément de véhicule comprenant au moins un essieu avant, en particulier un groupe motopropulseur, en particulier boulonné, et/ou les monocoques dans la première section ou à la première extrémité comprennent des dispositifs pour le boulonnage à un châssis ou à une cabine.

13. Procédé de fabrication d'un châssis autoporteur pour un véhicule terrestre comprenant les étapes suivantes pour la fabrication du châssis:
- fournir deux éléments allongés en forme d'auge ayant au moins un fond inférieur (14) et deux parois latérales (13) s'étendant vers le haut à partir du fond
- fournir au moins un élément de couverture de jambe de force et
- relier les trois éléments au moins de manière à ce que les sections ou les éléments en forme d'auge soient disposés parallèlement les uns aux autres et soient partiellement fermés par l'élément de couverture de contreventement, dans lequel les éléments en forme de gouttière sont fermés par des éléments de plafond et/ou par au moins un élément de plafond de contreventement à au moins 50% et
deux monocoques parallèles sont formés et
dans lequel les éléments sont disposés de telle sorte que l'élément de couverture de l'étai au moins présent couvre un espace entre les éléments en forme d'auge et que l'élément de plafond de contreventement au moins présent soit fermement fixé aux parois latérales des monocoques,
où les éléments en forme d'auge sont chacun fabriqués d'une seule pièce et entièrement en matériau composite à base de fibres.

14. Procédé selon la revendication ci-dessus comprenant la fabrication des éléments et/ou des sections en forme d'auge par un procédé de pultrusion.

15. Procédé de fabrication d'un véhicule terrestre selon l'une des revendications 13 à 14, y compris la production d'un véhicule terrestre avec un châssis avec cadre inférieur comme châssis ou partie du châssis.
